Europäisches Patentamt

(19) European Patent Office

Office européen des brevets

(11) Numéro de publication: **0 059 663**
**B1**

(12) **FASCICULE DE BREVET EUROPEEN**

(45) Date de publication du fascicule du brevet: **07.01.87**

(51) Int. Cl.⁴: **G 01 P 13/00**

(21) Numéro de dépôt: **82400324.8**

(22) Date de dépôt: **24.02.82**

(54) **Dispositif de contrôle de circulation de fluide.**

(30) Priorité: **02.03.81 FR 8104085**

(43) Date de publication de la demande:
**08.09.82 Bulletin 82/36**

(45) Mention de la délivrance du brevet:
**07.01.87 Bulletin 87/02**

(84) Etats contractants désignés:
**AT BE CH DE GB IT LI LU NL SE**

(56) Documents cités:
**DE-A-1 763 219**
**DE-A-2 200 820**
**GB-A- 797 238**
**US-A-2 687 457**

(73) Titulaire: **ETABLISSEMENTS TROUVAY &**
**CAUVIN Société Anonyme**
**. 58, rue Général Chanzy·**
**F-76097 Le Havre Cédex (FR)**

(72) Inventeur: **Benard, Henri**
**8, Place du Général Leclerc**
**F-76400 Fecamp (FR)**
Inventeur: **Henocque, Jean**
**84, rue d'Ignauval**
**F-76310 Sainte Adresse (FR)**

(74) Mandataire: **Rodhain, Claude**
**Cabinet Claude Rodhain 30, rue la Boétie**
**F-75008 Paris (FR)**

Courier Press, Leamington Spa, England.

## Description

La présente invention concerne un dispositif de contrôle horizontal de circulation de fluide destiné à être utilisé dans des conduites d'installations hydrauliques véhiculant en circuit fermé des gaz et des liquides notamment radioactifs ou autrement contaminés, ledit dispositif comprenant un corps comportant un manchon cylindrique inséré dans la conduite dans laquelle est monté le dispositif, un battant étant monté à l'intérieur dudit manchon et pivotant par sa partie supérieure sur un axe horizontal transversal audit manchon.

Dans le domaine des circuits hydrauliques, il est bien connu d'utiliser de tels contrôleurs ou voyants de circulation constitués en général par un boîtier partiellement transparent, permettant d'observer le sens de déplacement éventuel d'un fluide ou liquide dans des canalisations et/ou son débit. A cet effet, certains contrôleurs connus de circulation comportent un battant mobile, pivotant autour d'un axe horizontal parallèle à la direction d'observation et perpendiculaire au sens de déplacement du fluide, ces contrôleurs étant placés habituellement soit dans la canalisation de trop plein d'un réservoir, d'une pompe d'un échangeur thermique ou autre, soit dans la canalisation de purge du circuit hydraulique. Dans un premier cas, ils permettent de contrôler que le plein d'un réservoir est réalisé par le fait que le liquide débordant du réservoir et refoulé dans la canalisation d'évent fait basculer le battant dans le sens de circulation, alors que dans le cas d'une purge, ils permettent de constater qu'un liquide s'écoule encore ou qu'il est totalement évacué.

Cependant, de telles installations fonctionnent bien dans le cas où elles communiquent avec l'extérieur, au niveau de la canalisation d'évent, en comportant par exemple un orifice d'évent situé à l'extrémité supérieure du réservoir, de la pompe ou autre, de manière à empêcher l'apparition soit d'une surpression, par exemple, dans le réservoirs lors de son remplissage, soit d'une dépression lors de son vidage. Or, c'est précisément ce genre d'inconvénients (surpression-dépression) que l'on risque de rencontrer d'une manière générale dans le cas de circuits fermés, et plus particulièrement dans le cas de ceux véhiculant des liquides contaminés, et où, pour des raisons évidentes de sécurité, il ne peut être question d'une ouverture à l'air libre. Pour résoudre ce problème, on a pensé à augmenter le diamètre de la conduite collectant les purges pour lui permettre également de remplir la fonction de collecte des évents.

Parmi les dispositifs connus de ce type, il est décrit dans le brevet US—A—2 687 457 un dispositif destiné à fournir une indication lorsque le débit d'un liquide de refroidissement ou de lubrification d'un moteur à combustion interne dans ses canalisations n'est pas suffisant. Il comprend un corps de forme à peu près complètement cubique, dans lequel un battant oscillant est monté par l'intermédiaire de moyens de transmission qui sont adaptés pour mesurer son déplacement. Ce battant est rappelé en position neutre au moyen d'un ressort et ne peut donc pas osciller librement, il fait donc obstacle à un écoulement rapide du liquide en l'absence d'une pression.

Le brevet DE—A—1 763 219 décrit également un dispositif dans lequel un battant est monté oscillant dans un simple tuyau et comporte à sa partie inférieure un aimant permanent dont le déplacement par rapport à un inverseur électromagnétique commande un autre dispositif. En raison même de ce système, il ne peut être réalisé qu'en une matière magnétique. En outre, la forme du battant n'est pas déterminante.

En raison du champ particulier d'application de l'invention aux circuits de purge et d'évent en circuits fermés dans les installations de centrales nucléaires, aucun de ces deux dispositifs de la technique antérieure ne peut être utilisé.

La présente invention a pour but de fournir un dispositif du type précité qui ne présente pas ces inconvénients.

Il est caractérisé en ce que:

a) il comporte un espace interne délimité par l'intersection avec ledit manchon d'un cylindre de même diamètre intérieur que le manchon, l'axe du cylindre étant perpendiculaire à celui du manchon;

b) l'espace de pivotement dudit battant est délimité par la surface cylindrique intérieure dudit manchon et par celle dudit cylindre;

c) le battant présente une dimension, parallèlement audit axe horizontal, supérieure audit diamètre intérieur et est muni à sa partie supérieure d'une découpe permettant à un courant de liquide d'agir sur la partie inférieure du battant sans empêcher le passage d'un gaz à travers ladite découpe.

Grâce à l'invention, l'air situé au-dessus du liquide circulant dans le circuit peut librement remonter par une ligne d'évent, qui lui est raccordée, ou par la canalisation elle-même.

La libre circulation de l'air en circuit fermé est garantie sans aucune surpression, ni dépression dans les canalisations. De plus, l'invention permet de supprimer toute zone de rétention du liquide contaminé ce qui est absolument nécessaire dans les circuits de centrales nucléaires véhiculant des matières dangereuses.

D'autres caractéristiques de l'invention sont décrites dans les sous-revendications.

L'invention sera décrite ci-après à l'aide d'un exemple de réalisation en référence aux dessins annexés sur lesquels:

— la Fig. 1 représente schématiquement un circuit fermé à réservoir de stockage de liquide, utilisant un contrôleur de circulation conforme à l'invention.

— les Figs. 2 et 3 représentent respectivement une vue en coupe longitudinale et une vue en coupe transversale du contrôleur de circulation selon l'invention.

— la Fig. 4 représente le schéma de principe du collectage des purges et des évents d'un système hyraulique à circuits multiples comprenant plusieurs appareils contaminés.

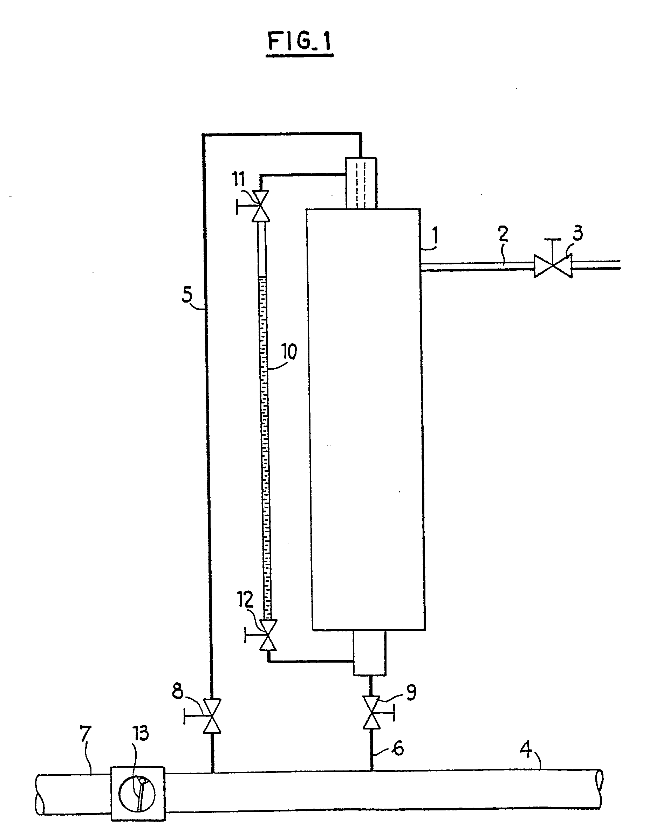

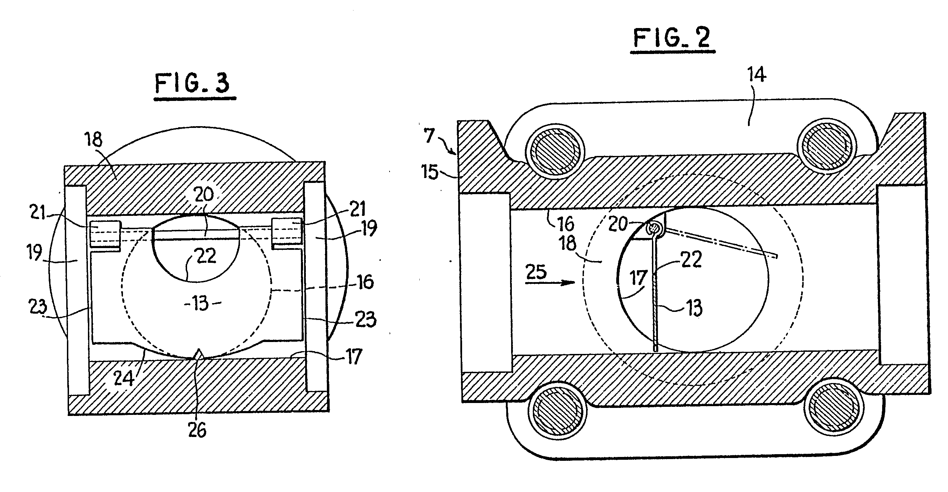

Le circuit hydraulique représenté sur la Fig. 1 se compose d'un réservoir 1 raccordé par une canalisation 2 à une vanne 3 de remplissage, ce réservoir étant relié par sa partie supérieure et par sa partie inférieure à un collecteur 4, respectivement par une tuyauterie d'évent 5 et une tuyauterie de purge 6. Sur ce collecteur 4 est monté un contrôleur 7 conforme à l'invention. Sur ces tuyauteries 5—6 sont prévus des robinets ou vannes de sectionnement 8—9. Par ailleurs, le circuit comprend une colonne 10 servant d'indicateur de niveau de réservoir 1 et comportant deux robinets 11 et 12. Le contrôleur de circulation 7, qui contient un battant mobile 13 et qui sera décrit de façon détaillée en référence aux Figs. 2 et 3, est directement monté sur le collecteur 4.

Sur les Figs. 2 et 3, on a représenté de façon détaillée le contrôleur de circulation 7, fixé dans une bride de fixation représentée schématiquement et désigné par la référence 14. Le contrôleur de circulation 7 est formé d'un manchon cylindrique 15 dont la surface intérieure cylindrique 16 coupe la surface intérieure cylindrique 17 d'un cylindre 18 de même diamètre intérieur que celui du manchon 15, dont l'axe est perpendiculaire à celui de ce dernier et qui porte deux verres circulaires plats d'extrémité 19 fermant l'ensemble de façon étanche et permettant d'observer le battant mobile 13. Ce dernier peut pivoter autour d'un axe horizontal 20, (perpendiculaire au sens de déplacement du fluide), dont les extrémités sont montées dans des paliers latéraux 21 solidaires du cylindre 18, de manière à pouvoir prendre une position horizontale. Le battant 13 comporte à sa partie supérieure une découpe ou échancrure 22, par exemple de forme semi-circulaire. Par ailleurs, le battant 13 possède des bords latéraux verticaux 23 jouxtant directement les verres plats verticaux 19 et un bord inférieur 24 dont le profil est ajusté à la surface géométrique située à l'intérieur du contrôleur de circulation et par rapport à laquelle pivote le battant 13.

On voit donc clairement sur les Figs. 2 et 3 que, lors du passage d'un liquide dans le sens de la flèche 25 dans le contrôleur de circulation 7, le liquide repousse le battant 13 vers la droite, tandis que l'air refoulé peut circuler librement à travers la découpe supérieure 22 dudit battant. En outre, le battant comporte sur son bord inférieur 24 une encoche 26 destinée à permettre l'écoulement du reliquat de liquide pouvant subsister derrière le battant lorsqu'il est en position fermée.

Selon l'invention, le diamètre intérieur du collecteur 4 sur lequel est monté le contrôleur 7 est nettement supérieur au diamètre des canalisations qui lui sont raccordées. De plus, toute zone de rétention est supprimée à la partie inférieure du manchon 15 par le fait qu'au niveau de l'intersection des deux surfaces cylindriques intérieures, 16 et 17, de même diamètre, toutes les lignes de la surface 16 convergent vers la génératrice inférieure de la surface 17.

Le remplissage du réservoir 1 s'effectue par la conduite 2, on ferme le robinet 9, on s'assure que le niveau 10 est en communication à l'aide des robinets 11 et 12 et on ouvre le robinet d'évent 8 et le robinet de remplissage 3. Le remplissage est terminé lorsque l'eau, débordant du réservoir 1 et refoulée dans la ligne d'évent 5, apparait dans le contrôleur de circulation 7 en déplaçant le battant mobile 13 vers la gauche.

On réalise la vidange du réservoir en fermant le robinet de remplissage 3 et en ouvrant le robinet d'évent 8, puis le robinet de purge 9 (les deux robinets de niveau 11—12 restant ouverts). Sous l'effet de la pression de la colonne d'eau contenue dans le réservoir 1, l'eau s'écoule par le robinet 9 et est remplacée dans le réservoir par de l'air qui, après avoir cheminé à contre-courant dans le contrôleur 7, (par le jeu de l'ouverture 22), pénètre dans ledit réservoir par la conduite d'évent 5.

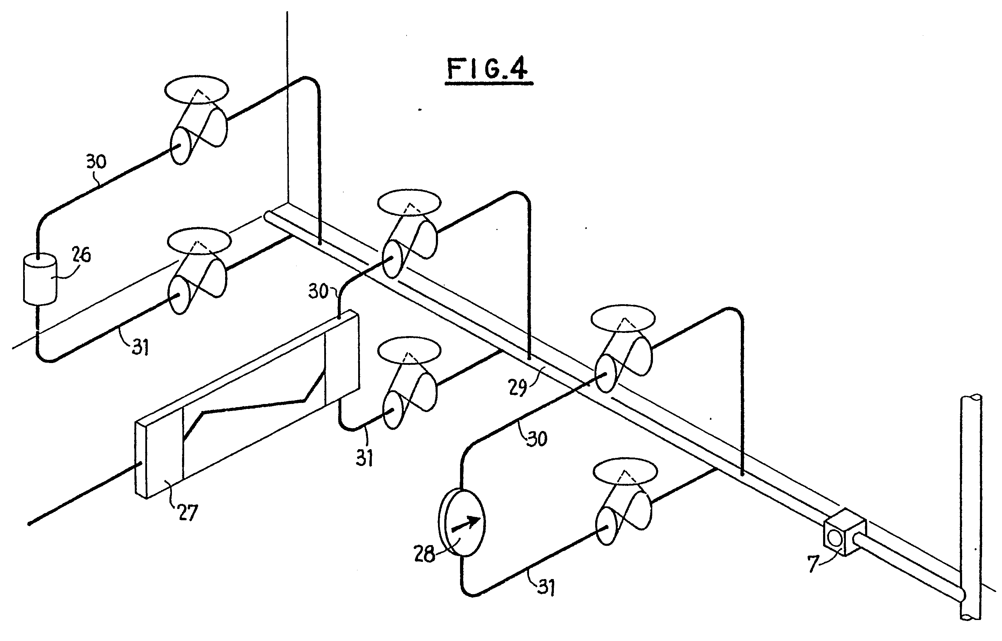

La Fig. 4 montre le cas du collecteur des purges et des évents de plusieures appareils, comme par exemple un réservoir 26, un échangeur thermique 27 et une pompe 28 installés sur des circuits analogues à celui de la Fig. 1 et raccordés en parallèle sur une conduite collectrice commune 29 d'un diamètre nettement supérieur à celui des diverses lignes de purge et d'évent 30, 31. Un dispositif de contrôle 7 conforme à l'invention est monté sur la conduite 29, en aval de l'ensemble de ces lignes de purge et d'évent 30, 31.

**Revendications**

1. Dispositif (7) de contrôle horizontal de circulation de fluide destiné à être utilisé dans des conduites d'installations hydrauliques véhiculant en circuit fermé des gaz et des liquides notamment radioactifs ou autrement contaminés, ledit dispositif comprenant un corps comportant un manchon (15) cylindrique inséré dans la conduite (4) dans laquelle est monté le dispositif, un battant (13) étant monté à l'intérieur dudit manchon (15) et pivotant par sa partie supérieure sur un axe (20) horizontal transversal audit manchon (15), ledit dispositif étant caractérisé en ce que:

a) il comporte un espace interne délimité par l'intersection avec ledit manchon (15) d'un cylindre (18) de même diamètre intérieur que le manchon (15), l'axe du cylindre (18) étant perpendiculaire à celui du manchon (15),

b) l'espace de pivotement dudit battant (13) est délimité par la surface cylindrique intérieure (16) dudit manchon (15) et par celle (17) dudit cylindre (18),

c) le battant (13) présente une dimension, parallèlement audit axe (20) horizontal, supérieure audit diamètre intérieur et est muni à sa partie supérieure d'une découpe (22) permettant à un courant de liquide d'agir sur la partie inférieure du battant (13) sans empêcher le passage d'un desdits gaz à travers ladite découpe (22).

2. Dispositif (7) suivant la revendication 1, caractérisé en ce que le diamètre intérieur dudit manchon (15) est supérieur à celui de ladite conduite (4) dans laquelle est monté le dispositif (7), assurant ainsi le libre passage à la fois pour le liquide et de l'air.

3. Dispositif suivant la revendication 1 ou 2, caractérisé en ce que le bord inférieur (24) du battant (13) comporte une encoche (26) servant à l'évacuation du reliquat de liquide se trouvant dans le manchon (15) du dispositif lorsque le battant (13) se trouve en position verticale de fermeture.

4. Utilisation d'un seul dispositif suivant l'une quelconque des revendications 1 à 3, dans le cas d'une installation hydraulique comportant des drains résiduaires pour plusieurs circuits de purge et d'évent, associés notamment à des réservoirs (26) des pompes (28), des échangeurs thermiques (27), installation dans laquelle ledit seul dispositif de contrôle de circulation (7) est installé en aval de l'ensemble des lignes de purge et d'évent (30, 31) de tous les circuits, raccordées à une canalisation commune (29) de même diamètre intérieur que celui du manchon (15) du dispositif.

**Patentansprüche**

1. Vorrichtung (7) zur horizontalen Kontrolle der Zirkulation eines Fluids zur Verwendung in Leitungen hydraulischer Einrichtungen, die in geschlossenem Kreis insbesonders radioaktive oder auf andere Weise verunreinigte Gase und Flüssigkeiten transportieren, welche Vorrichtung einen Körper mit einem zylindrischen Stutzen (15) aufweist, der in die Leitung (4), in der die Vorrichtung montiert ist, eingesetzt ist, wobei ein Schlagventil (13) im Inneren des gennantem Stutzens (15) montiert ist, das mit seinem oberen Teil um eine horizontale, zum genannten Stutzen (15) quergerichtete Achse (20) schwenkt, dadurch gekennzeichnet, daß

a) sie einem Innenraum aufweist, der durch den Schnitt eines Zylinders (18) mit dem genannten Stutzen (15) begrenzt ist, welcher Zylinder den gleichen Innendurchmesser aufweist wie der Stutzen (15), wobei die Achse des Zylinders (18) senkrecht zur Achse des Stutzens (15) ist,

b) der Schwenkraum des genannten Schlagventils (13) durch die zylindrische Innenfläche (16) des genannten Stutzens (15) und durch jene (17) des genannten Zylinders (18) begrenzt ist,

c) das Schlagventil (13) parallel zur genannten horizontalen Achse (20) eine Abmessung aufweist, die größer ist als der genannte Innendurchmesser, und daß es in seinem oberen Teil einen Ausschnitt (22) aufweist, durch den ein Flüssigkeitsstrom auf den unteren Teil des Schlagventiles (13) einwirken kann, ohne das Passieren eines der genannten Gase durch den genannten Ausschnitt (22) zu hindern.

2. Vorrichtung (7) nach Anspruch 1, dadurch gekennzeichnet, daß der Innendurchmesser des genannten Stutzens (15) größer ist als jener der Leitung (4), in der die Vorrichtung (7) montiert ist, wodurch ein freies Passieren der Flüssigkeit und der Luft auf einmal gewährleistet ist.

3. Vorrichtung nach Anspruch 1 oder 2, dadurch gekennzeichnet, daß der unteren Rand (24) des Schlagventiles (13) eine Einkerbung (26) aufweist, die zum Evakuieren des im Stutzen (15) der Vorrichtung befindlichen Flüssigkeitsrestes dient, wenn sich das Schlagventil (13) in vertikaler Schließstellung befindet.

4. Verwendung einer einzigen Vorrichtung nach einem der Ansprüche 1 bis 3 im Falle einer hydraulischen Einrichtung mit Rückstands-Abzugsrohren für mehrere Reinigungs- und Lüftungsleitungen, die insbesondere mit Reservoirs (26), Pumpen (28), Wärmetauschern (27) verbunden sind, in welcher Einrichtung die genannte einzige Vorrichtung (7) zur Kontrolle der Zirkulation stromabwärts der Reinigungs- und Lüftungsleitungen (30, 31) aller Kreise angeordnet ist, die an eine gemeinsame Abflußleitung (29) gleichen Innendurchmessers wie der des Stutzens (15) der Vorrichtung angeschlossen sind.

**Claims**

1. A device (7) for the horizontal monitoring of a flow of fluid for use in conduits of hydraulic installations conveying gases and liquids, more particularly radioactive or other contaminated gases and liquids, in a closed circuit, the said device comprising a body having a cylindrical sleeve (15) inserted in the conduit (4) in which the device is mounted, a door valve (13) being mounted inside the said sleeve (15) and pivoting with its upper portion about a horizontal axis (20) transverse to the said sleeve (15), the said device being characterised in that:

a) it comprises an internal space defined by the intersection between the said sleeve (15) and a cylinder (18) having the same inner diameter as the sleeve (15), the axis of the cylinder being perpendicular to that of the sleeve (15),

b) the pivoting space of the said door valve (13) is delimited by the inner cylindrical surface (16) of the said sleeve (15) and by the inner cylindrical surface (17) of the said cylinder (18),

c) the door valve (13) has a dimension parallel to the said horizontal axis (20) greater than the said inner diameter and is provided at its upper portion with a cut-out (22) which allows a flow of liquid to act upon the lower part of the door valve (13) without impeding the passage of one of the said gases through the said cut-out (22).

2. A device (7) according to claim 1, characterised in that the inner diameter of the said sleeve (15) is greater than that of the said conduit (4) in which the device (7) is mounted, thus ensuring the free passage of the liquid and the air simultaneously.

3. A device according to claim 2, characterised in that the lower edge (24) of the door valve (13) comprises a notch (26) which is used for the drainage of liquid residue in the sleeve (15) of the device when the door valve (13) is in a vertical closed position.

4. Use of a single device according to any one of claims 1 to 3, in the case of a hydraulic installation comprising waste drains for a plurality of drainage and ventilation circuits, more particularly connected to reservoirs (26), pumps (28), and heat exchangers (27), in which installation the single said flow monitoring device (7) is installed downstream of all the drainage and ventilation lines (30, 31) of all the circuits, which are connected to a common mains (29) having the same inner diameter as that of the sleeve (15) of the device.

# FIG.1

FIG. 3

FIG. 2

0 059 663

FIG.4